# EUROPÄISCHE PATENTSCHRIFT

(11) **EP 0 832 006 B1**
(45) Veröffentlichungstag und Bekanntmachung des Hinweises auf die Patenterteilung: **04.07.2001**
(21) Anmeldenummer: 97920672.9
(22) Anmeldetag: 14.04.1997
(51) Int. Cl.: B60L 9/30, H02M 1/10

(54) **HOCHSPANNUNGS-STROMRICHTERSYSTEM**
HIGH VOLTAGE POWER CONVERTER SYSTEM
SYSTEME CONVERTISSEUR HAUTE TENSION

(30) Priorität: 13.04.1996 DE 19614627
(43) Veröffentlichungstag der Anmeldung: 01.04.1998
(73) Patentinhaber: DaimlerChrysler AG, 70546 Stuttgart (DE)
(72) Erfinder: STEINER, Michael, D-68723 Schwetzingen (DE); KRAFKA, Peter, D-69198 Schriesheim (DE)
(74) Vertreter: Luderschmidt, Schüler & Partner GbR
(86) Internationale Anmeldenummer: EP9701852
(87) Internationale Veröffentlichungsnummer: WO9738873

(56) Entgegenhaltungen:
- EP-A- 0 330 055
- EP-A- 0 676 854
- DE-A- 3 817 652

## Beschreibung

Die Erfindung bezieht sich auf ein Hochspannungs-Stromrichtersystem gemäß dem Oberbegriff des Patentanspruchs 1 sowie auf Verfahren zur Regelung dieses Hochspannungs-Stromrichtersystems.

Ein solches Hochspannungs-Stromrichtersystem ist aus der DE 38 17 652 A1 bekannt. Das aus dieser Schrift bekannte Schienentriebfahrzeug weist mindestens zwei Antriebsanlagen auf, die jeweils mindestens einen Vierquadrantensteller, einen Gleichspannungszwischenkreis und einen selbstgeführten Wechselrichter zur Speisung mindestens eines Fahrmotors aufweisen. Das Schienenfahrzeug ist als Mehrsystem-Triebfahrzeug ausgebildet und universell an Wechselspannung oder Gleichspannung verschiedener Höhe betreibbar, wobei jeweils Umgruppierungen der einzelnen Leistungsbausteine mit Hilfe von Schaltgeräten vorzunehmen sind. Bei Wechselspannungs-Einspeisung liegt jeder Vierquadrantensteller an einer eigenen Sekundärwicklung eines Transformators. Bei Gleichspannungs-Einspeisung ist jeder Vierquadrantensteller über die entsprechende Sekundärwicklung des Transformators an den Fahrdraht geschaltet, während die entsprechende Primärwicklung kurzgeschlossen ist. Wenn die Gleichspannung relativ hoch ist, werden die Antriebsanlagen eingangsseitig in Reihe geschaltet, während dagegen eine eingangsseitige Parallelschaltung der Antriebsanlagen vorgesehen ist, wenn eine relativ niedrige Gleichspannung vorliegt.

Ein solches Stromrichtersystem läßt sich besonders vorteilhaft im Rahmen eines Antriebssystems für Schienenfahrzeuge anwenden. Die nachstehende Beschreibung bezieht sich deshalb auf Antriebssysteme, obwohl sich das Stromrichtersystem grundsätzlich auch zur Speisung anderer, z. B. auch stationärer Verbraucher unterschiedlicher Art aus einem Hochspannungsnetz verwenden läßt.

Auf dem Gebiet der Antriebssysteme für Schienenfahrzeuge sind Teilstromrichtersysteme in unterschiedlichen Schaltungsvarianten bekannt, die - teilweise - auch im erfindungsgemäßen Stromrichtersystem anwendbar sind.

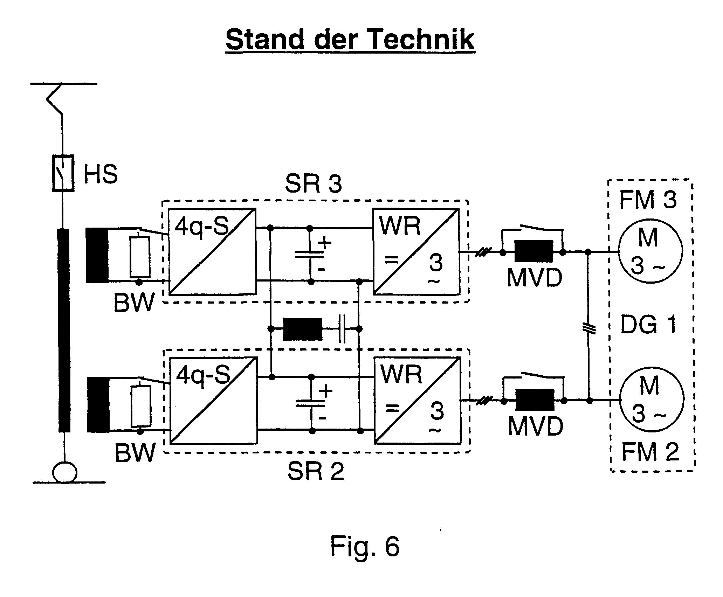

In Fig. 6 ist ein Stromrichtersystem gemäß dem Oberbegriff des Anspruchs 1 dargestellt. Fig. 6 ist der Druckschrift "Systemtechnologie; Fahrzeugtechnik für alle Anwendungen" der ABB Henschel Lokomotiven GmbH, Mannheim, vom Februar 1993, Seite 46 entnommen. Zwischen der angedeuteten Fahrleitung und der Schiene liegt eine Hochspannung an, die je nach Bahnsystem bezüglich Spannungshöhe und Frequenz unterschiedlich sein kann. Die Bundesbahn arbeitet beispielsweise mit 15kV, 16²/₃ Hz. Diese Fahrspannung ist über einen Schalter HS auf die Primärwicklung eines nicht bezeichneten Transformators schaltbar. An dessen zwei Sekundärwicklungen ist jeweils ein Teilstromrichtersystem SR2, SR3 angeschlossen. Diese speisen über Motor-Vorschaltdrosseln MVD zwei parallel geschaltete Fahrmotoren FM2, FM3.

Die Teilstromrichtersysteme weisen jeweils einen zweiphasigen Vierquadrantensteller 4q-S als Eingangsstromrichter auf, der eine Gleichspannung in einen durch einen Kondensator dargestellten Spannungszwischenkreis liefert. Ein mehrphasiger Wechselrichter WR liefert jeweils den Drehstrom für die Fahrmotoren.

Eine ähnliche Anordnung, dort mit vier Sekundärwicklungen des Transformators und jeweils angeschlossenem Teilstromrichtersystem ist im Hochgeschwindigkeitszug ICE realisiert und z.B. in der von den Firmen AEG, ABB und Siemens gemeinsam herausgegebenen Druckschrift VT 62,89/26, 100035 dargestellt.

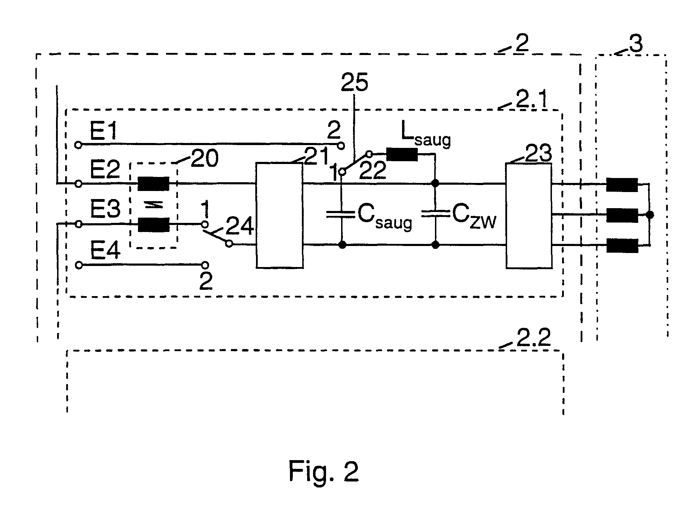

In der Dissertation Stefan Östlund, "A Primary Switched Converter System for Traction Applications", Trita-EMK-9201, ISSN 1100-1631, Royal Institute of Technology, Stockholm, ist als Figur 6.2.3 eine Stromrichterschaltung für Schienenfahrzeuge angegeben, bei der vier Netzstromrichter in Reihe geschaltet sind. An jedem Ausgang der Netzstromrichter ist jeweils eine Primärwicklung eines Transformators angeschlossen. An die einzige Sekundärwicklung des Transformators ist ein Vierquadrantensteller angeschlossen, der einen Gleichspannungs-Zwischenkreis speist, aus dem - entsprechend einer in Fig. 2.2.1 angegebenen Schaltung - über einen Wechselrichter ein Motor gespeist wird.

Bekannte Antriebssysteme unterscheiden sich zwar voneinander bezüglich des inneren Aufbaus der Teilstromrichtersysteme und der motorseitigen Schaltung, wesentlich ist jedoch, daß alle diese Systeme einen netzseitigen Transformator aufweisen.

Der Erfindung liegt die Aufgabe zugrunde, ein Stromrichtersystem nach dem Oberbegriff des Anspruchs 1 anzugeben, das zu einer Verringerung an Gewicht, Volumen und Kosten führt, und insbesondere für Antriebssysteme anwendbar ist. Das Stromrichtersystem soll auch als Mehrsystem d.h. für den Betrieb mit unterschiedlichen Spannungen und Frequenzen, auch mit Gleichspannung ausführbar sein.

Diese Aufgabe wird bei einem Stromrichtersystem gemäß dem Oberbegriff des Anspruchs 1 durch dessen kennzeichnende Merkmale gelöst.

Mit der Erfindung wird eine Stromrichterschaltung vorgegeben, die einen netzseitigen Transformator auch im Fall einer hohen Eingangswechselspannung entbehrlich macht.

Vorteile ergeben sich nicht nur bezüglich einer jeweils 30%-igen Einsparung bezüglich Gewicht, Volumen und Kosten eines Antriebssystems (Stromrichtersystem und Motor) durch den Wegfall des Transformators, sondern auch wegen der vereinfachten Möglichkeit zur Gestaltung von Mehrsystemlösungen und zur Erhöhung der Verfügbarkeit durch zuschaltbare redundante Teilsysteme.

Im Vergleich zu der aus der oben genannten Dissertation Östlund bekannten Anordnung mit einer auf der Primärseite eines Transformators angeordneten Reihenschaltung von Netzstromrichtern ergeben sich weniger Energiewandlungsstufen. Bei der bekannten Anordnung sind durch Netzstromrichter, Vierquadrantensteller und Wechselrichter drei Energiewandlungen erforderlich, bei der erfindungsgemäßen Anordnung dagegen nur zwei Energiewandlungen, nämlich im Eingangsstromrichter und im Wechselrichter. Ein weiterer, im Hinblick auf die Kosten wesentlicher Unterschied besteht darin, daß die bekannte Anordnung einen Direktumrichter mit symmetrisch sperrenden Halbleiter-Bauelementen erfordert, während beim erfindungsgemäßen System mit kostengünstigeren asymmetrischen Halbleitern gearbeitet werden kann. Außerdem fällt der Mittelfrequenz-Transformator weg und die Potentialtrennung erfolgt im Motor selbst, einem Mehrsternsystem mit potentialgetrennten Sternpunkten.

Vorteilhafte Ausgestaltungen des Stromrichtersystems sind in weiteren Ansprüchen angegeben und der unten stehenden Beschreibung von Ausführungsbeispielen anhand der Zeichnungsfiguren zu entnehmen.

### Es zeigen:

- Fig. 1: Stromrichtersystem in einer Prinzipdarstellung eines Antriebssystems mit Mehrsystem-Speisung,
- Fig. 2: Stromrichtersystem wie Fig. 1, mit Darstellung des Teilsystem-Aufbaues,
- Fig. 3: Teilstromrichtersystem mit stromkompensierter Eingangsdrosselspule,
- Fig. 4: Anordnung einer Motor-Vorschaltdrossel in einem System gemäß Fig. 1 oder 2,
- Fig. 5: Motor-Vorschaltdrossel mit Ringkern,
- Fig. 6: Stromrichteranordnung nach dem Stand der Technik,
- Fig. 8: Prinzipdarstellung der Serienschaltung zweier Eingangsstromrichter,
- Fig. 9: Zeigerdiagramm für den Fall symmetrischer Last,
- Fig. 10 + 11: unsymmetrische Lastaufteilung,
- Fig. 12: Übermodulation eines Stellers, und
- Fig. 13 - 16: Grundschwingungskompensation.

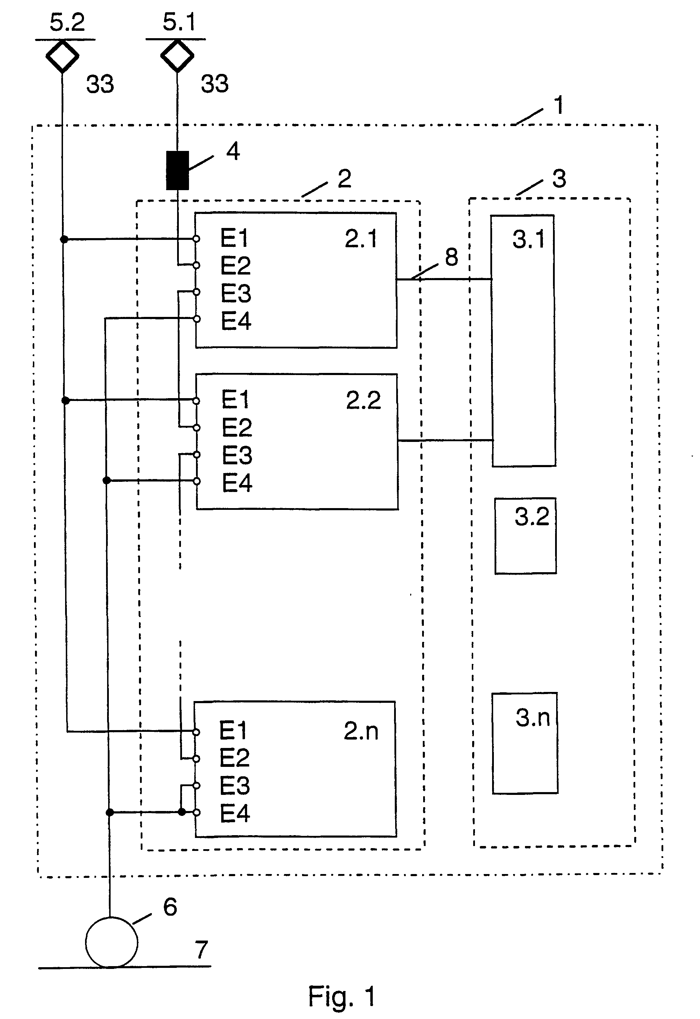

**Fig. 1** zeigt das Schema eines Antriebssystems 1 für ein Schienenfahrzeug.

Das Antriebssystem 1 enthält ein Stromrichtersystem 2 und ein Verbrauchersystem 3. Eine außerdem als Teil des Antriebssystems 1 dargestellte Eingangsdrosselspule 4 kann alternativ dazu Teil des Stromrichtersystems 2 sein. Anstelle einer konzentrierten Eingangsdrosselspule 4, die in Bezug auf einen Überspannungsschutz zweckmäßig ist, können auch verteilte Drosseln angeordnet werden.

Die Fig. 1 dient einerseits zur Definition der benutzten Begriffe, zeigt aber auch die erfindungsgemäße Konzeption des Antriebssystems 1 in einer sogenannten Mehrsystem-Schaltung.

Unter Mehrsystem-Schaltung wird verstanden, daß Teilsysteme des Stromrichtersystems 2 so umgruppiert bzw. umgeschaltet werden können, daß sie an unterschiedlichen Hochspannungssystemen betrieben werden können. Die Unterschiede beziehen sich dabei auf die Höhe der Spannung und der Frequenz, auch auf Gleichspannung. In Fig. 1 wird differenziert zwischen einem Wechselspannungssystem 5.1 mit z.B. 25 kV-50Hz oder 15kV-16²/,Hz und einem Gleichspannungssystem 5.2 mit 3kV oder 1,5kV.

Das Antriebssystem 1 enthält mehrere Teilstromrichtersysteme 2.1 bis 2.n, die im dargestellten Beispiel jeweils vier eingangsseitige Anschlüsse E1 bis E4 aufweisen.

Das Verbrauchersystem 3 kann aus mehreren Verbrauchern 3.1 bis 3.n bestehen, wobei ein Verbraucher je nach Verbraucherart aus einem oder mehreren der Teilstromrichtersysteme 2.1 bis 2.n gespeist werden kann. Im Fall des hier betrachteten Antriebssystems ist das Verbrauchersystem ein Motorsystem, beispielsweise in Ein- oder Mehrsternschaltung oder sonstiger Mehrwicklungsanordnung. Je nach Wicklungsschaltung sind Verbindungsleitungen 8 zwischen den Teilstromrichtersystemen 2.1 bis 2.n und einem Verbraucher Zwei- oder Dreileiterverbindungen.

Je nach Hochspannungssysteme werden die Teilstromrichtersysteme 2.1 bis 2.n in unterschiedlicher Schaltung, d.h. in Parallel- oder Reihenschaltung sowie mit oder ohne Einsatz der Eingangssteller (vgl. Fig. 2) der Teilstromrichtersysteme 2.1 bis 2.n betrieben. In Fig. 1 sind die unterschiedlichen Schaltungsmöglichkeiten, je nach Speisung - über Stromabnehmer 33 - aus dem Wechselspannungssystem 5.1 oder dem Gleichspannungssystem 5.2 dargestellt. Mit Bezugszeichen 6 ist ein Rad und mit 7 die Schiene eines Rad/Schiene-Systems angedeutet.

**Fig. 2** zeigt korrespondierend zu Fig. 1 beispielhaft Einzelheiten des Aufbaues der Teilstromrichtersysteme 2.1 bis 2.n, die jeweils gleichartig ausgeführt sind.

Ein Teilstromrichtersystem enthält eine Eingangsdrosselanordnung 20, einen Eingangsstromrichter 21, der vorzugsweise als Vierquadrantensteller ausgeführt ist, einen Spannungszwischenkreis 22 mit einem Zwischenkreiskondensator C_{zw} und einem Wechselrichter 23 als Maschinenstromrichter.

Ein erster Umschalter 24 und ein zweiter Umschalter 25 sind angeordnet zur Umschaltung auf unterschiedliche Hochspannungssysteme. In einer ersten Schalterstellung des ersten Umschalters 24 sind die Eingangsstromrichter 21 in Reihe geschaltet für den Betrieb an der hohen Wechselspannung 5.1, die über einen Eingang E2 des ersten Teilstromrichtersystems 2.1 eingespeist wird. In einer zweiten Schalterstellung 2 des ersten Umschalters 24 kann eine Gleichspannungseinspeisung 5.2 über die Eingänge E1 aller Teilstromrichtersysteme 2.1 bis 2.n erfolgen, wobei die Eingangssteller 21 nicht im Einsatz sind. Die Einspeisung erfolgt parallel in die jeweiligen Spannungszwischenkreise 22 der Teilstromrichtersysteme 2.1 bis 2.n über den in Schalterstellung 2 befindlichen zweiten Umschalter 25 und über eine Drosselspule L_{SAUG}, die an die DC-Strombelastung angepaßt ist.

Im Fall der Wechselspannungseinspeisung aus dem ersten Hochspannungssystem 5.1 befindet sich der zweite Umschalter 25 in Schalterstellung 1, wobei die Drosselspule L_{SAUG} zusammen mit dem Saugkreis-Kondensator C_{SAUG} einen Saugkreis bildet.

Es versteht sich, daß die Höhe der parallel einspeisbaren Gleichspannung begrenzt ist durch die Spannungsfestigkeit der Halbleiter des Wechselrichters.

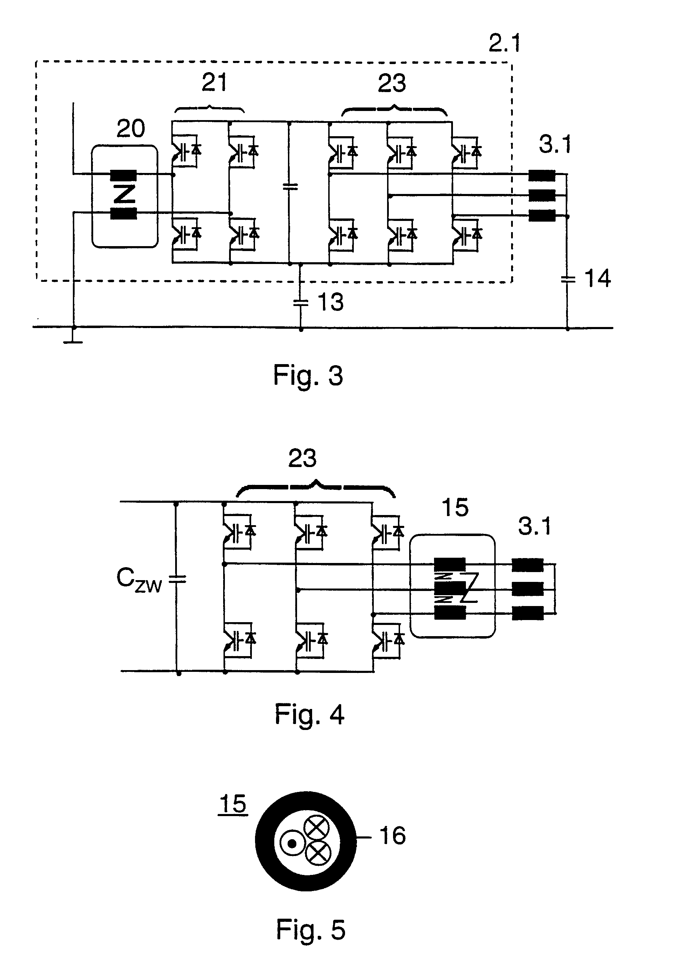

**Fig. 3** zeigt eine Anordnung eines Teilstromrichtersystems, z.B. 2.1, mit Eingangsdrosselanordnung 20, die vorzugsweise als stromkompensierte Drossel ausgeführt wird, wodurch parasitäre Ausgleichsströme zwischen den Eingangsstromrichtern 21 der Teilstromrichtersysteme gedämpft werden. Außerdem zeigt Fig. 3 mögliche parasitäre Kopplungen zwischen Teilstromrichter und Masse - vereinfacht als konzentriertes Kondensatorelement 13 dargestellt - sowie zwischen Motor 3.1 und Masse, ebenfalls als konzentriertes Kondensatorelement 14 dargestellt.

**Fig. 4** zeigt eine mögliche Anordnung einer - aus der Literatur bekannten -stromkompensierten Motor-Vordrossel 15 zur Reduzierung solcher parasitärer Effekte. Da die Summe der Ströme, wenn man parasitäre Effekte vernachlässigt, praktisch Null ist, kann der in **Fig. 5** gezeigte Eisenkern 16 einer solchen stromkompensierten Motor-Vordrossel 15 sehr klein dimensioniert werden.

Einige Schutzeinrichtungen und Mittel zur Schaffung von Redundanzen können vorgeschen werden.

Neben einer Sicherung und einem Überspannungsableiter können im Netzstrompfad ein Hauptschalter, ein Netzfilter, eine Netzdrosselspule, zwei Stromwandler und als Überspannungsschutz ein Varistor angeordnet werden. An die Stromwandler kann eine Differentialschutzeinrichtung angeschlossen werden, die den Hauptschalter im Fall einer Stromdifferenz zwischen Ein- und Ausgang des Stromrichtersystems ansteuert.

Als Verbraucher können Dreistern-Motoren über Motorschalter angeschlossen werden, wobei jeweils ein Motorschalter ein Teilstromrichtersystem mit einem Sternsystem eines Motors verbindet.

Jedes Teilstromrichtersystem kann mittels eines Überbrückungsschalters abgeschaltet werden. Durch entsprechende Schaltungsanordnung kann ein als Redundanz angeordnetes zusätzliches Teilstromrichtersystem im Störungsfall an die Stelle eines defekten Teilstromrichtersystems treten, bzw. ein defektes Teilstromrichtersystem überbrückt werden, wenn dies im voraus entsprechend bei der Schaltungsausiegung auf Redundanz berücksichtigt wurde.

Die Steuerung und Regelung der Teilstromrichtersysteme, insbesondere deren in Serie geschalteten Eingangsstromrichter kann auf unterschiedliche Weise unter Anwendung bekannter Regelungsverfahren erfolgen. Es versteht sich allerdings, daß eine sonst übliche Regelung der Zwischenkreisspannung durch lastabhängige Einstellung des Eingangsstromes hier nicht möglich ist. Der Eingangsstrom ist bedingt durch die Serienschaltung der Teilstromrichtersysteme in allen Eingangsstromrichtern gleich.

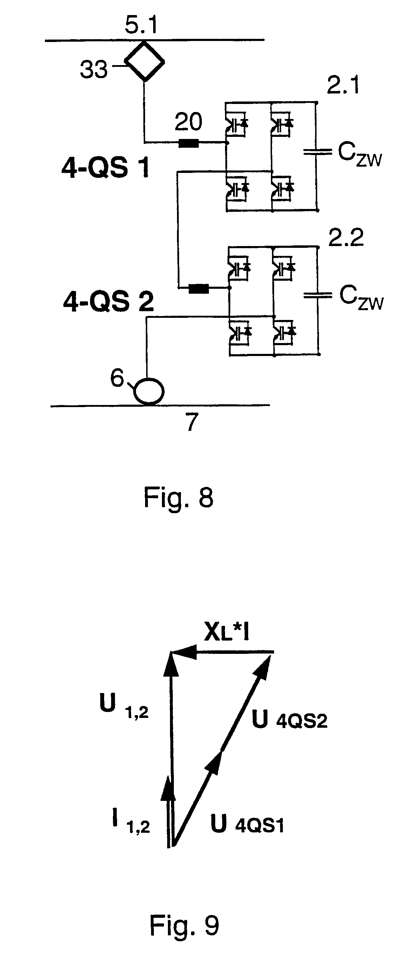

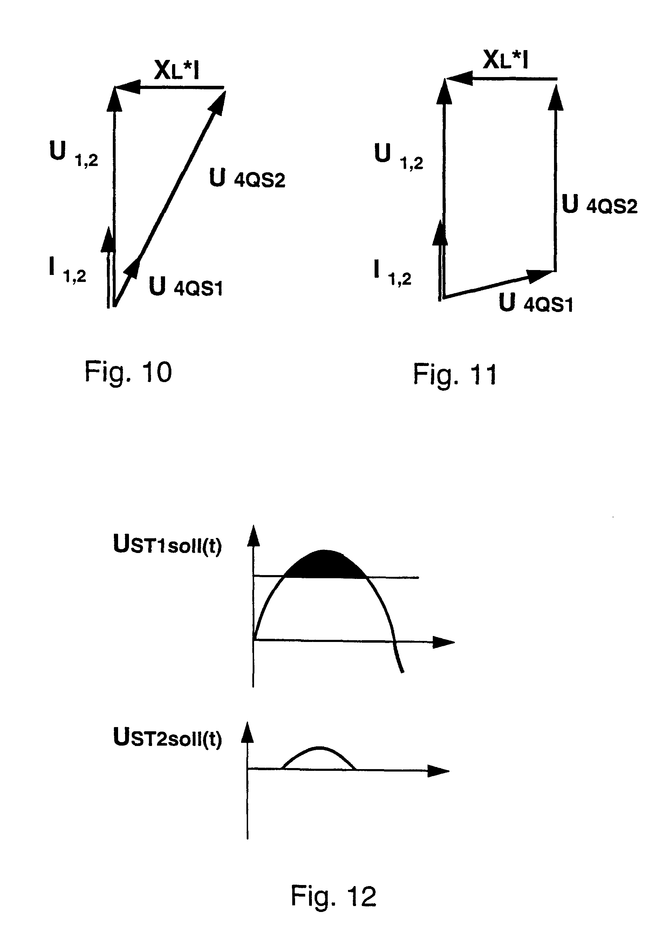

Der Eingangsstrom, also der Netzstrom des Stromrichtersystems, wird durch die aufgenommene Gesamtleistung des Stromrichtersystems bestimmt. Eine Leistungsaufteilung auf einzelne Teilstromrichtersysteme kann nur über die Spannungen der einzelnen Eingangsstromrichter bei gleichzeitiger Erfüllung des Summenzeigerdiagramms erfolgen, das in **Fig. 9** beispielhaft für einen Fall mit symmetrischer Lastaufteilung auf zwei Teilstromrichtersysteme dargestellt ist. **Fig. 10** zeigt eine unsymmetrische Lastaufteilung. **Fig. 11** zeigt eine andere mögliche unsymmetrische Lastaufteilung, bei der die Einzelspannungen nicht in Phase mit der Gesamtspannung sind.

In **Fig. 8** ist ein zur Fig. 9 korrespondierendes Prinzipschema einer Serienschaltung zweier Eingangsstromrichter 21, bezeichnet als Vierquadrantensteller 4-QS1 bzw. 4-QS2, dargestellt. Die Ausführungen beziehen sich hier außerdem auf die Speisung von Antriebsmotoren, sowie auf sinusförmigen Netzstrom.

Es ist zu berücksichtigen, daß Betriebszustände möglich sind, in denen die einzelnen Teilstromrichtersysteme mit unterschiedlicher Last betrieben werden. Eine unterschiedliche Last kann z.B. in unterschiedlichen Betriebspunkten auftreten. Dies ist z.B. bei Maschinen mit offenen Wicklungen, insbesondere bei kleinen Maschinendrehzahlen der Fall, da die sinusförmigen Ströme der offenen Wicklungen zeitlich verschoben sind.

Ein anderer Fall mit unterschiedlicher Belastung von Teilstromrichtersystemen ist gegeben, wenn das gesamte Stromrichtersystem mehrere Maschinen treibt (vgl. Fig. 6 oder 7), die unterschiedlich belastet sind.

Die aufgenommene Leistung eines Teilstromrichtersystems ergibt sich aus dem Produkt aus Spannung und Strom, wobei der Strom sich aus der Summe der einzelnen Leistungen und der Gesamtspannung ergibt. Der Gesamtstrom (gleich mit Teilstrom, da eine Serienschaltung vorliegt) ändert sich mit der Gesamtbelastung des gesamten Stromrichtersystems. Die Leistung eines Teilstromrichtersystems wird bei dem jeweils durch die Serienschaltung gegebenen Eingangsstrom durch die jeweilige Eingangsstromrichterspannung geregelt.

Die Sollspannung eines Eingangsstromrichters wird bei symmetrischer Last festgelegt durch das Verhältnis der Gesamtspannung zur Anzahl der Teilstromrichtersysteme.

Bei unsymmetrischer Last kann die Sollspannung des Eingangsstromrichters aus dem Verhältnis des Leitwertes des einzelnen Eingangsstromrichters zum Gesamtleitwert multipliziert mit der Gesamtsteller-Sollspannung gebildet werden. Die Stellersollspannung kann aber auch aus der komplexen Aufteilung der Teilleistungen abgeleitet werden, wobei im Fall einer begrenzten maximalen Stellerspannung eine größere Differenz zwischen den Teilleistungen ermöglicht wird.

Bei der Serienschaltung mehrerer Teilstromrichter können einzelne Teilstromrichtersysteme netzseitig in Übermodulation betrieben werden, wenn die Steuerspannung der nicht in Übermodulation betriebenen Teilstromrichtersysteme derart gewählt wird, daß eine sinusförmige Gesamtspannung erreicht werden kann. Mit dieser Methode kann die Leistung der in Übermodulation betriebenen Teilstromrichter gesteigert werden, um maximal 27%, während die Gesamtleistung des Stromrichtersystems gleichbleibt. Dies reduziert die gesamthaftinstallierte Leistung, wenn starke unsymmetrische Lastaufteilung erwartet wird. **Fig. 12** zeigt den Fall der Übermodulation eines Stellers, bei der Serieschaltung von zwei Teilstromrichtern. Der zweite Steller liefert in diesem Fall eine Spannung in der Weise, daß die Gesamtspannung sinsusförmig ist. Diese Betriebsart wurde in Fig. 12 für zwei Steller gezeigt, ist aber auf mehrere Steller in derselben Weise erweiterbar.

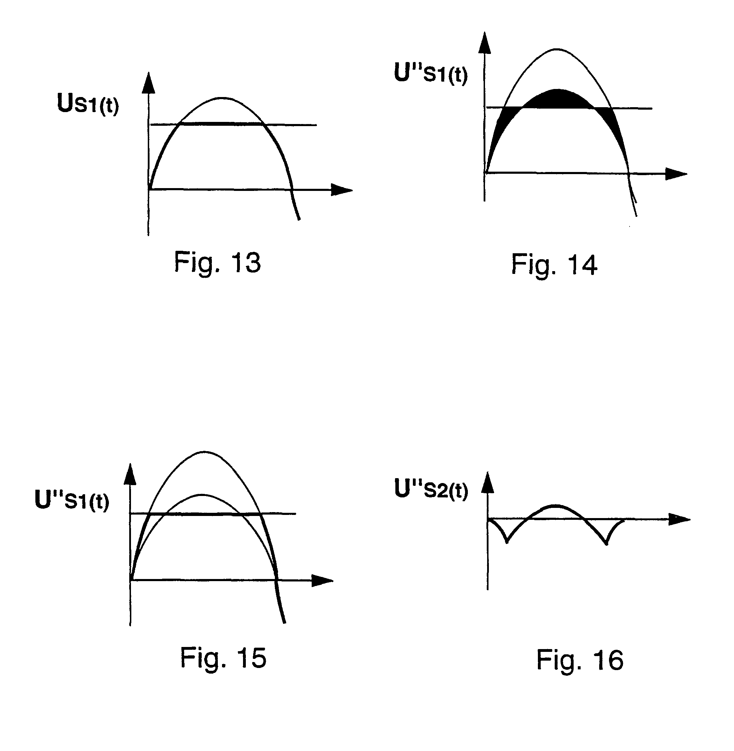

**Fig. 13 bis Fig. 16** zeigen eine Grundschwingungskompensation, falls ein Steller in Übermodulation betrieben wird. Durch die systembedingte Stellerspannungsbegrenzung auf Zwischenkreisspannung wird die geforderte Grundschwingungsspannung nicht mehr erreicht, wenn keine zusätzlichen Maßnahmen ergriffen werden. Dies kann aber im voraus kompensiert werden, wenn die Sollstellerspannung im voraus erhöht wird. Sie wird genau um einen solchen Faktor erhöht, der bewirkt, daß die geforderte Grundschwingungsspannung wieder erreicht wird. Dieser Faktor kann im voraus berechnet werden und in einer Tabelle abgelegt werden. Derjenige Steller, der nicht in Übermodulation betrieben wird, muß nun zusätzlich die Spannung übernehmen, die sich aus der Differenz der ursprünglich geforderten Spannung und der letztlich modulierten Spannung gegeben ist. Die letztlich modulierte Spannung ergibt sich aus der Spannung, die durch die Zwischenkreisspannung gegeben ist und der Spannung nach der Grundschwingungskompensation, solange die Zwischenkreisspannungsbegrenzung nicht vorliegt.

Fig. 13 zeigt die Stellerspannung eines Stellers in Übermodulation, ohne Grundschwingungskompensation.

Fig. 14 zeigt die Stellerspannung vor und nach der Grundschwingungskompensation. Die grau straffierte Fläche muß vom anderen Steller übernommen werden.
Fig. 15 zeigt die Stellersollspannung des in Übermodulation betriebenen Stellers, nach der Grundschwingungskompensation.
Fig. 16 zeigt die Stellersollspannung eines, hier unbelasteten, Stellers, der in Serie zum übermodulierten Steller betrieben wird. Falls der Steller belastet ist, wird seine Stellersollspannung zu derjenigen addiert, die sich aus der Grundschwingungskompensation des übermodulierten Stellers ergibt.

Das Verfahren wurde hier wieder am Beispiel von zwei Teilstromrichtern gezeigt, ist aber unter Verwendung derselben Systematik leicht auf mehr oder zwei Steller erweiterbar, weshalb auf ein weiteres Beispiel verzichtet wurde.
Die Grundschwingungskompensation vermeidet Abweichungen zwischen Regelungsforderung und möglicher Stellerspannung. Mit der Grundschwingungskompensation ist eine lineare Regelung bis zur obersten Aussteuergrenze, der Grundfrequenztaktung, möglich.

### Bezugszeichenliste

- 1: Antriebssystem
- 2: Stromrichtersystem
- 2.1 bis 2.n: Teilstromrichtersysteme
- 3: Verbrauchersystem
- 3.1 bis 3.n: Verbraucher (Motor)
- 4: Eingangsdrossel
- 5.1: erstes Hochspannungsnetz (Wechselspannung)
- 5.2: zweites Hochspannungsnetz (Gleichspannung)
- 6: Rad
- 7: Schiene
- 8: Verbindungsleitung
- 9: Sicherung
- 10: Überspannungsableiter
- 11: Hauptschalter
- 12: Netzfilter
- 13: parasitäre Kopplung zwischen Teilstromrichter und Masse
- 14: parasitäre Kopplung zwischen Motor und Masse
- 15: Motor-Vordrossel
- 16: Eisenkern
- 17: Netzdrosselspule
- 18: Stromwandler
- 19: Varistor
- 20: Eingangsdrosselanordnung
- 21: Eingangsstromrichter
- 22: Spannungszwischenkreis
- 23: Wechselrichter
- 24: erster Umschalter
- 25: zweiter Umschalter
- 30: Differentialschutzeinrichtung
- 31: Motorschalter
- 32: Überbrückungsschalter
- 33: Stromabnehmer

## Patentansprüche

1. Stromrichtersystem zur Speisung wenigstens eines Verbrauchers (3, 3.1 bis 3.n) aus einem Hochspannungsnetz (5.1, 5.2), wobei das Stromrichtersystem (2) mehrere Teilstromrichtersysteme (2.1 bis 2.n) enthält, jedes Teilstromrichtersystem (2.1 bis 2.n) wenigstens einen Eingangsstromrichter (21), einen Spannungszwischenkreis (22) und einen Wechselrichter (23) enthält und Mittel (24, 25) vorhanden sind, die im Falle einer Einspeisung einer Gleichspannung (5.2, z. B. 1,5kV oder 3kV) eine parallele Einspeisung in die Spannungszwischenkreise (22) der Teilstromrichtersysteme (2.1 bis 2.n) durchführen, dadurch gekennzeichnet,
- daß bei den besagten Mitteln (24, 25) jeweils keine Vor-, Zwischen- oder Nachschaltung eines Transformators vorgesehen ist und
- daß im Fall einer Einspeisung einer hohen Wechselspannung (5.1, z. B. 15kV-16²/₃Hz, 25kV-50Hz) die Mittel (24, 25) eine Serienschaltung der Eingangsstromrichter (21) der Teilstromrichtersysteme (2.1 bis 2.n) durchführen.

2. Stromrichtersystem nach Anspruch 1, dadurch gekennzeichnet, daß es Teil eines Antriebssystems (1) eines Schienenfahrzeugs ist.

3. Stromrichtersystem nach Anspruch 1 oder 2, dadurch gekennzeichnet, daß als Verbraucher (3.1 bis 3.n) wenigstens ein Asynchronmotor angeschlossen ist, der mehrere offene Wicklungen oder Wicklungen in Mehrsternschaltung aufweist.

4. Stromrichtersystem nach einem der vorstehenden Ansprüche, dadurch gekennzeichnet, daß zwischen dem Netz (5.1, 5.2) und jedem Eingangsstromrichter (21) eine Eingangsdrossel (20) angeordnet ist.

5. Stromrichtersystem nach Anspruch 1 bis 3, dadurch gekennzeichnet, daß eine für alle Teilstromrichtersysteme (2.1 bis 2.n) gemeinsame Netzdrosselspule (17) angeordnet ist.

6. Stromrichtersystem nach einem der vorstehenden Ansprüche, dadurch gekennzeichnet, daß die Teilstromrichtersysteme (2.1 bis 2.n) in 2-Punkt- oder Mehrpunkt-Schaltung ausgeführt sind.

7. Stromrichtersystem nach einem der vorstehenden Ansprüche, dadurch gekennzeichnet, daß die Wechselrichter (23) zwei- oder mehrphasig ausgeführt sind.

8. Verfahren zur Regelung des Stromrichtersystems nach einem der Ansprüche 1 bis 7, dadurch gekennzeichnet, daß einzelne der in Serie geschalteten netzseitigen Steller (21) in Übermodulation betreibbar sind, wobei wenigstens einer der übrigen Steller (21) eine solche Spannung liefert, daß die Gesamtspannung sinusförmig ist.

9. Verfahren zur Regelung des Stromrichtersystems nach einem der Ansprüche 1 bis 7, dadurch gekennzeichnet, daß einzelne der in Serie geschalteten netzseitigen Steller (21) in Übermodulation betreibbar sind, wobei die Soll-Grundschwingungsspannung um einen solchen vorausberechneten Faktor erhöht wird, daß die systembedingte Stellerspannungsbegrenzung auf Zwischenkreisspannung kompensiert wird und eine sinusförmige Gesamtspannung resultiert.

## Claims

1. A power converter system for supplying at least one consumer (3, 3.1 to 3.n) from a high-voltage network (5.1, 5.2), wherein said power converter system (2) comprises several partial converter systems (2.1 to 2.n), each of said partial converter systems (2.1 to 2.n) comprising at least one of an input power converter (21), an intermediate voltage circuit (22) and a commutated inverter (23), and wherein means (24, 25) are comprised which, in case of supplying a direct current voltage (5.2, e.g., 1.5 kV or 3kV), accomplish a parallel supply to said intermediate voltage circuits (22) of said partial converter systems (2.1 to 2.n), said power converter system being characterized in that,
for each of said means (24, 25), none of a preceding connection, an interconnection or a subsequent connection of a transformer is provided, and in that, in case of supplying a high alternating current voltage (5.1, e.g., 15kV-16²/₃ Hz, 25kV-50Hz), said means (24, 25) accomplish a series connection of said input power converters (21) of said partial converter systems (2.1 to 2.n).

2. The power converter system of claim 1, characterized in that it constitutes a part of a driving system (1) of a rail vehicle.

3. The power converter system of claim 1 or 2, characterized in that at least one asynchronous motor is connected as the consumer (3.1 to 3.n), said asynchronous motor comprising several open circuit windings or windings of multi-star-connection.

4. The power converter system of one of the preceding claims, characterized in that an input reactor (20) is disposed between said network (5.1, 5.2) and each of said input power converters (21).

5. The power converter system of claims 1 to 3, characterized in that a power choke coil (17) is contained that is common to all partial converter systems (2.1 to 2.n).

6. The power converter system of one of the preceding claims, characterized in that the partial converter systems (2.1 to 2.n) are developped like a two-way or a multiple-way circuit.

7. The power converter system of one of the preceding claims, characterized in that the commutated inverters (23) are completed in two-phase or multiple-phase arrangement.

8. A process for the control of the power converter system of one of claims 1 to 7, characterized in that individual line side actuators (21) connected in series are operable in overmodulation mode, wherein at least one of the residuary actuators (21) produces a voltage such as to make the overall voltage sinusoidal.

9. A process for the control of the power converter system of one of claims 1 to 7, characterized in that individual line side actuators (21) connected in series are operable in overmodulation mode, wherein the desired fundamental voltage is increased by a precalculated factor such that the actuator voltage limitation due to the system is compensated to the voltage of the intermediate circuit thereby resulting in a sinusoidal overall voltage.

## Revendications

1. Système convertisseur pour l'alimentation d'au moins un récepteur (3,3.1 à 3.n) à partir d'un réseau haute tension (5.1, 5.2), le système convertisseur (2) comprenant plusieurs systèmes convertisseurs de courant partiel (2.1 à 2.n), chaque système convertisseur de courant partiel (2.1 à 2.n) contenant au moins un convertisseur d'entrée (21), un circuit intermédiaire de tension (22) et un onduleur (23) et des moyens (24, 25) étant présents, qui effectuent dans le cas d'une alimentation d'une tension continue (5,2, par exemple 1,5kV ou 3kV) une alimentation parallèle dans les circuits intermédiaires de tension (22) des systèmes convertisseurs de courant partiel (2.1 à 2.n), caractérisé en ce que, pour lesdits moyens (24, 25), il n'est pas prévu de montage préliminaire, intermédiaire ou postérieur d'un transformateur et en ce que, dans le cas d'une alimentation d'une tension alternative élevée (5,1, par exemple 15kV,162/3Hz, 25 kV-50Hz), les moyens (24, 25) effectuent un montage en série des convertisseurs d'entrée (21) des systèmes convertisseurs de courant partiel (2.1 à 2.n).

2. Système convertisseur selon la revendication 1, caractérisé en ce qu'il fait partie d'un système d'entraînement (1) d'un véhicule sur rails.

3. Système convertisseur selon la revendication 1 ou 2, caractérisé en ce que, comme récepteur (3.1 à 3.n), au moins un moteur asynchrone est raccordé, lequel présente plusieurs enroulements ouverts ou enroulements dans un montage à plusieurs étoiles.

4. Système convertisseur selon l'une quelconque des revendications précédentes, caractérisé en ce qu'une bobine d'inductance d'entrée (20) est disposée entre le secteur (5.1, 5.2) et chaque convertisseur d'entrée (21).

5. Système convertisseur selon les revendications 1 à 3, caractérisé en ce qu'on a disposé une bobine d'inductance à courant de secteur (17) commune pour tous les systèmes convertisseurs de courant partiel (2.1 à 2.n).

6. Système convertisseur selon l'une quelconque des revendications précédentes, caractérisé en ce que les systèmes convertisseurs de courant partiel (2.1 à 2.n) sont conçus comme un montage à 2 points ou plusieurs points.

7. Système convertisseur selon l'une quelconque des revendications précédentes, caractérisé en ce que les onduleurs (23) sont réalisés en diphasé ou polyphasé.

8. Procédé pour le réglage du système convertisseur selon l'une quelconque des revendications 1 à 7, caractérisé en ce que certains actionneurs (21) côté secteur montés en série peuvent être exploités en surmodulation, au moins l'un des autres actionneurs (21) fournissant une tension telle que la tension globale soit sinusoïdale.

9. Procédé pour le réglage du système convertisseur selon l'une quelconque des revendications 1 à 7, caractérisé en ce que certains actionneurs (21) côté secteur montés en série peuvent être exploités en surmodulation, la tension théorique de l'oscillation de base étant augmentée d'un facteur précalculé tel que la limitation de tension d'actionneur, conditionnée par le système, à la tension du circuit intermédiaire est compensée et qu'il en résulte une tension globale sinusoïdale.
